# EUROPEAN PATENT SPECIFICATION

(11) **EP 0 738 635 B1**
(45) Date of publication and mention of the grant of the patent: **18.07.2001**
(21) Application number: 96302740.4
(22) Date of filing: 19.04.1996
(51) Int. Cl.: B60S 1/38

(54) **Snap assembly knuckles for windshield wiper blades**
Zusammenschnappbare Drehverbindung eines Scheibenwischerblattes
Joint d'articulation assemblé par encliquetage pour balai d'essuie-glace

(30) Priority: 20.04.1995 AU PN250895
(43) Date of publication of application: 23.10.1996
(73) Proprietor: TRICO PRODUCTS CORPORATION, Buffalo, NY 14203-1298 (US)
(72) Inventor: Burton, Edward, Dandenong North, Victoria (AU)
(74) Representative: James, Michael John Gwynne

(56) References cited:
- EP-A- 0 405 837
- EP-A- 0 686 538
- DE-A- 4 025 280
- DE-U- 8 515 052
- US-A- 4 909 653

## Description

The present invention relates to improvements in automobile wiper blade assemblies and in particular to improved pivotal connections between primary and secondary yokes.

Wiper blade assemblies comprise an articulated superstructure supporting a wiper strip, in which the superstructure comprises a plurality of yokes interconnected by pivot joints with a series of secondary yokes connected releasably to the wiper strip along its length. The yokes are commonly made of a metallic material of inverted U or inverted channel cross-section so as to have a back and a pair of opposed, parallel side walls extending downwards from the back, the side walls of a primary yoke being spaced a sufficient distance apart to receive the secondary yokes in a nesting relationship.

Conventionally, the pivot joints between a primary and a secondary yoke may consist of a rivet with or without a plastic spacer, or a crimp joint over a plastic knuckle. The plastic spacer of knuckle usually consists of a back or web with a pair of opposed side walls or pair of cheeks arranged between the primary and secondary yokes at the joint to prevent noise caused by metal to metal contact. The plastic spacer or knuckle may also in some cases act as a pivot bearing. Any rivet joint arrangement used in the prior art provides a labour intensive assembly method and is therefore relatively costly to produce.

The object of this invention is to provide an improved form of interconnection between the pivot joints of a wiper blade assembly which will permit improved assembly mechanisation and provide an effective joint construction while limiting the number of parts required and minimizing or avoiding drawbacks associated with existing arrangements.

Patent Specification US-A-4909653 discloses a pivot joint in a wiper blade assembly, said pivot joint including a primary channel member having a base wall and a side wall depending from each longitudinally extending edge of said base wall, a secondary channel member having a base wall and a side wall depending from each longitudinally extending edge of said base wall located such that said secondary channel member nests within said primary channel member, and an insert member of channel configuration having a base wall and a side wall depending from opposed edges of said base wall with said insert member located between said primary and said secondary channel members. In this prior art pivot joint, said insert member has a circular solid trunnion extending inwardly from each said insert member side wall and engaged within a circular bearing aperture in a respective said side wall of said secondary channel member, whereby said secondary channel member may rotate with respect to said insert member, and said insert member further has a circular projection extending outwardly from each said insert member side wall, each said projection being engaged outwardly in an aperture in a respective said side wall of the primary channel member, said projection corresponding in shape to the part of the aperture in which it is engaged.

According to the invention, in such a pivot joint, each said projection on the insert member is of non-circular form extending outwardly from each said insert member side wall, each said non-circular projection being engaged outwardly in a non-circular slot in a respective said side wall of the primary channel member, each said non-circular projection corresponding in shape to the part of the slot in which it is engaged, whereby rotation of said non-circular projection in said slot, and of thus said primary channel member with respect to said insert member, is prevented, each said slot opening onto a lower edge of the side wall in which the slot is formed and said slots further including retention means to retain the non-circular projections engaged therewith.

By the pivot arrangement defined above, ease of assembly is achieved by the insert member being capable of flexing over and fitting with the secondary channel member and this subassembly being capable of mechanised assembly with the primary channel member simply by pushing the non-circular projections into the apertures in the side walls of the primary channel section in a direction transverse to the channel sections rather than a more complicated and difficult procedure of mechanised assembly in a longitudinal direction of the channel members. Further the use of separate pivot pins are avoided thereby avoiding a separate assembly step and of course also avoiding the possibility that such separate pivot pins could become disengaged during use of the wiper blade assembly. Finally no metal forming or crimping steps are required with the primary or secondary channel members thereby ensuring against damage to pain work and of course ensuring that this difficult and extra assembly task does not have to be carried out.

According to a further aspect, the present invention provides an improved insert member for use in a pivot joint of a wiper blade assembly of the type of this invention as herein before defined, the insert member being as defined in claim 7.

Further developments in line with the pivot joint and the insert according to the invention are referred to in the dependent claims 2 to 6 and 8 to 12.

Several preferred embodiments of the present invention will now be described with reference to the accompanying drawings, in which:
Figure 1 is a perspective exploded view of a first preferred embodiment of a pivot joint assembly according to the present invention;
Figure 2 is a perspective view similar to Figure 1 showing a second preferred embodiment; and
Figure 3 is a perspective view similar to Figure 1 showing a third preferred embodiment.

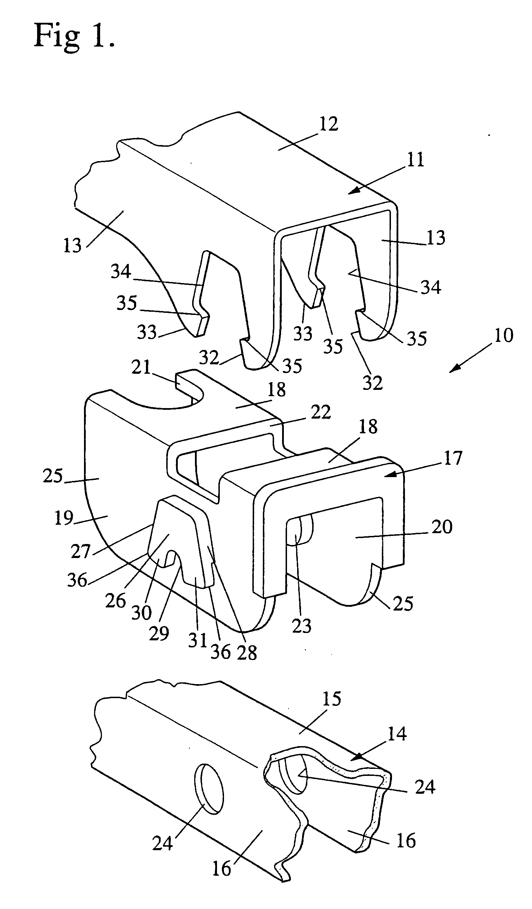

Figure 1 illustrates a pivot joint 10 in a wiper blade assembly. Any wiper blade assembly might include a plurality of such pivot joints 10, each comprising a primary channel member 11 having a base wall 12 and depending opposed side walls 13. The pivot joint 10 further includes a secondary channel member 14 adapted to nest, when assembled, within the primary channel member 11. The secondary channel member 14 has a base wall 15 and opposed depending side walls 16. Generally the primary and secondary channel members 11,14 are formed from metal sheet or plate as illustrated. An insert member 17, normally moulded from a suitable plastics material is provided for location between the primary and secondary channel members 11,14 such that the pivot point 10 is formed by the members 11,14 and the insert member 17. The insert member 17 is generally of a U-shaped configuration with a base wall 18 and two opposed side walls 19,20. The base wall 18 may have a number of cut out regions 21,22 to limit the amount of plastics material utilized and to improve the ability of the side walls 19,20 to flex toward or away from one another.

As shown in Figure 1, the side walls 19,20 of the insert member 17 include a pair of solid circular trunnions 23 extending a short distance inwardly of the member such that these trunnions can be engaged in circular bearing apertures 24 in the side walls 16 of the secondary channel member 14. This subassembly may be achieved by flexing the side walls 19,20 outwardly slightly and clipping the insert member 17 over the secondary channel member 14 to engage the trunnions 23 in the apertures 24. On the outer face 25 of each of the side walls 19,20 a non-circular projection 26 is provided which in this preferred embodiment conveniently has an outline shape generally configured like an A with two outer side edges 27,28 converging towards one another in an upward direction. The lower portion of the projection 26 has a recess 29 formed therein to create legs 30,31 which may conveniently also be spaced from the main outer face 25 of the side walls 19,20. This arrangement increases the flexibility of movement of at least the lower sections or legs 30,31 of the projection 26 toward one another. It will of course be appreciated that in another embodiment the projection 26 might be formed by a block with side edges 27,28 converging as illustrated, no undercuts and top and bottom edges generally parallel to one another and to the base wall 18. The projection 26 is so configured that it will fit into a slot 32 in a respective part of side wall 13 of the primary channel member 11. The slots 32 open onto a lower edge 33 of the side walls 13 and their upper ends 34 are shaped to closely engage around the side edges 27,28 and the top edge of the projection 26.

The slots 32 further include retaining ledge means 35 that engage with the lower corners 36 of the projection 26 once the projections 26 have been forced up into the slots 32 into the upper end zone 34. Assembly of the pivot joint 10 is therefore achieved by relatively moving the subassembly of the secondary channel member 14 and insert member 17 into the channel of the primary channel member 11 with sufficient force to connect the projections 26 into the retaining zones 34 of the slots 32. In this condition a substantial bearing surface is established between the projection 26 and the edges of the slot 32 that prevent rotation of the insert member 17 relative to the primary channel member 11. At the same time, pivoting of the secondary channel member 14 relative to the primary channel member 11 is achieved by the pivotal action of the trunnions 23 in the bearing apertures 24.

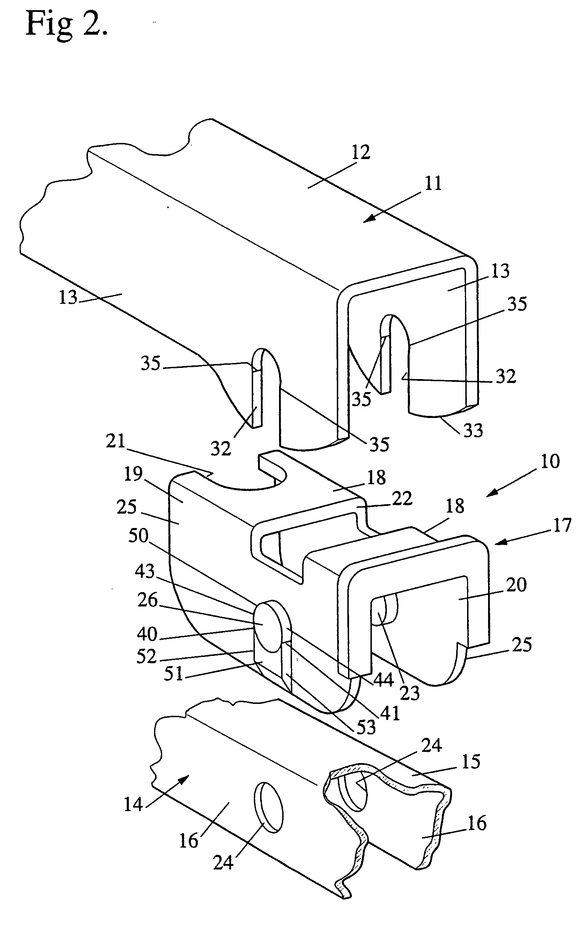

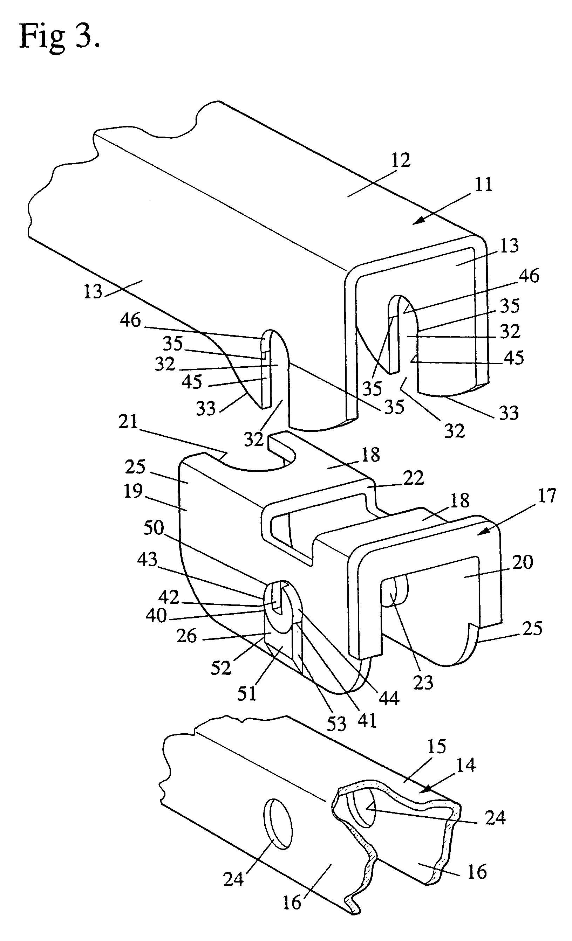

Figure 2 illustrates a similar arrangement to that which is shown in Figure 1 but with an alternative preferred form of non-circular projections 26 and cooperable slots 32 in the primary channel member 11. In this embodiment, the non-circular projection 26 is formed by an upper circular boss section 50 and a lower section 51 having parallel vertical side edges 52,53 generally perpendicular to the lower edges 33 of the side walls 19,20 of the insert member 17. The width between the side edges 52,53 is slightly less than the diameter of the boss section 50 so as to form retaining corners 40,41 which are engagable with retaining ledge means 35 in the slots 32. The outlined shape of the slots 32 in this embodiment are generally the same as the outline shape of the projection 26. Figure 3 illustrates another very similar embodiment to that which is shown in Figure 2. In this further embodiment, the boss section 50 of the non-circular projection 26 includes a groove or recess 42 so as to improve the flexibility or capability of the laterally opposed edges 43,44 of the boss section 50 moving towards one another to ease passage of the boss section 50 up the smaller lower section 45 of the slots 32 and thereafter enable them to spring back once the boss section 35 enters the upper section 46 of the slots 32. In both the embodiments of Figures 2 and 3, assembly is achieved by forcing the projection 26 into the slots 32 in a direction transverse to the longitudinal direction of the primary and secondary channel members until the boss section 50 is retained in the upper section 46 of the slots 32. It will of course be appreciated to those skilled in this art that other configurations of the non-circular projections 26 could also be utilized.

## Claims

1. A pivot joint in a wiper blade assembly, said pivot joint including:
a primary channel member (11) having a base wall (12) and a side wall (13) depending from each longitudinally extending edge of said base wall;
a secondary channel member (14) having a base wall (15) and a side wall (16) depending from each longitudinally extending edge of said base wall located such that said secondary channel member nests within said primary channel member;
an insert member (17) of channel configuration having a base wall (18) and a side wall (19) depending from opposed edges of said base wall with said insert member located between said primary and said secondary channel members;
said insert member having a circular solid trunnion (23) extending inwardly from each said insert member side wall and engaged within a circular bearing aperture (24) in a respective said side wall of said secondary channel member, whereby said secondary channel member may rotate with respect to said insert member;
said insert member further having a projection (26) extending outwardly from each said insert member side wall, each said projection being engaged outwardly in an aperture (34) in a respective said side wall of the primary channel member, each said projection corresponding in shape to the part of the aperture in which it is engaged;
characterised in that each said projection (26) is of non-circular form, each said non-circular projection being engaged outwardly in a non-circular slot (34) in a respective said side wall of the primary channel member, each said non-circular projection corresponding in shape to the part of the slot in which it is engaged, whereby rotation of said non-circular projection in said slot, and of thus said primary channel member with respect to said insert member, is prevented;
each said slot opening onto a lower edge (33) of the side wall in which the slot is formed and said slots further including retention means (35) to retain the non-circular projections engaged therewith.

2. A pivot joint according to claim 1 wherein each said non-circular projection has lateral side edges extending generally transverse to the longitudinal direction of said primary and secondary members, each said non-circular projection having at least one widened section between said lateral side edges and at least one narrowed section between said lateral side edges, and wherein said widened section cooperates with said retention means to prevent removal of said non-circular projection from a said slot in which it is engaged.

3. A pivot joint according to claim 2 wherein said non-circular projection includes recess means located between said lateral side edges in the vicinity of a said widened section to improve the ability of said lateral side edges to flex inwardly in at least the vicinity of said widened section.

4. A pivot joint according to claim 2 or claim 3 wherein at least part of the non-circular projection includes an undercut region.

5. A pivot joint according to any one of claims 2 to 4 wherein the lateral side edges converge from a said widened section at one end to a said narrowed section at the other end of each said side edge.

6. A pivot joint according to any one of claims 2 to 4 wherein the non-circular projection includes a semi-circular section and block section with the block section extending transversely toward a lower edge of the insert member side wall, said block section having a width less than the diameter of said semi-circular section.

7. An insert member for use in a pivot joint of a wiper blade assembly of the type as detailed in any one of claims 1 to 6, the insert member (17) being of channel configuration having a base wall (18) and a side wall (19, 20) depending from opposed edges of said base wall (18) with said insert member (17) being adapted to be located between said primary and secondary channel members (11, 14) of the pivot joint (10) according to any one of claims 1 to 6,
said insert member having a circular solid trunnion (23) extending inwardly from each said insert member side wall (19, 20) for engagement within each circular bearing aperture (24) in the respective side wall (16) of said secondary channel member (14) whereby said secondary channel member (14) may rotate with respect to said insert member (17),
said insert member further having a projection (26) extending outwardly from each said insert member side wall (19, 20) for engagement in the slot in a respective said side wall of the primary channel member (11),
characterised in that each said projection (26) is of non-circular form, corresponding in shape to the part of the non-circular slot (32) in which it is engaged, whereby rotation of said non-circular projection (26) in said slot (32) and of thus said primary channel member (11) with respect to said insert member (17) is prevented.

8. An insert member according to claim 7 wherein each said non-circular projection has lateral side edges (27,28) extending generally transverse to the longitudinal direction of said insert member, each said non-circular projection having at least one widened section between said lateral side edges and at least one narrowed section between said lateral side edges.

9. An insert member according to claim 8 wherein said non-circular projection includes recess means (29) located between said lateral side edges in the vicinity of a said widened section to improve the ability of said lateral side edges to flex inwardly at at least the vicinity of said widened section.

10. An insert member according to claim 8 or claim 9 wherein at least part of the non-circular projection includes an undercut region.

11. An insert member according to any one of claim 8 to 10 wherein the lateral side edges converge from a said widened section at one end to a said narrowed section at the other end of each said side edge.

12. A pivot joint according to any one of claims 8 to 10 wherein the non-circular projection includes a semi-circular (50) section and a block section (51) with the block section extending transversely toward a lower edge of the insert member side wall, said block section having a width less than the diameter of said semi-circular section.

## Patentansprüche

1. Zapfengelenk einer Wischerblattanordnung, folgendes umfassend,
ein erstes U-Profil-Element (11) mit einer Grundseite (12) und Schenkeln (13), welche sich von jeweiligen Längskanten der Grundseite erheben;
ein zweites U-Profil-Element (14) mit einer Grundseite (15) und Schenkeln (16), welche sich von jeweiligen Längskanten der Grundseite erheben und
derart angeordnet sind, daß das zweite U-Profil-Element in das erste U-Profil-Element paßt;
ein U-förmiges Zwischenelement (17) mit einer Grundseite (18) und Schenkeln (19), welche sich von gegenüberliegenden Kanten der Grundseite erstrecken, wobei das Zwischenelement zwischen dem ersten U-Profil-Element und dem zweiten U-Profil-Element angeordnet ist;
wobei das Zwischenelement einen runden, einteiligen Drehzapfen (23) aufweist, welcher sich von jedem Schenkel des Zwischenelements einwärts erstreckt und in eine runde Lageröffnung (24) in jeweiligen Schenkeln des zweiten U-Profil-Elementes eingreift, wobei das zweite U-Profil-Element bezüglich des Zwischenelementes schwenkbar ist;
wobei sich von jedem Schenkel des Zwischenelementes eine Erhebung (26) auswärts erstreckt, welche in eine Öffnung (34) in den jeweiligen Schenkeln des ersten U-Profil-Elementes greift, wobei eine Umrißform jeder Erhebung der jeweiligen Öffnung entspricht, in die diese greift;
**dadurch gekennzeichnet,** daß
jede Erhebung (26) ein unrunde Form aufweist, wobei jede unrunde Erhebung auswärts gerichtet in einen unrunden Schlitz (34) eines jeweiligen Schenkels des ersten U-Profil-Elementes greift, wobei ferner jede unrunde Erhebung in ihrer Umrißform dem Schlitz entspricht, in welchen sie eingreift, wodurch eine Verdrehung der unrunden Erhebung in dem Schlitz und damit des ersten U-Profil-Elementes bezüglich dem Zwischenelement verhindert ist;
wobei jeder Schlitz an einer Unterkante (33) des Schenkels, in dem der Schlitz ausgebildet ist, offen ist, und wobei ferner die Schlitze Rückhaltemittel (35) zum Zurückhalten der in Eingriff befindlichen unrunden Erhebungen aufweisen.

2. Zapfengelenk nach Anspruch 1, dadurch gekennzeichnet, daß jede unrunde Erhebung Seitenkanten aufweist, welche sich im wesentlichen quer zur Längsrichtung des ersten und zweiten U-Profil-Elementes erstrecken, wobei jede unrunde Erhebung zwischen den Seitenkanten wenigstens einen aufgeweiteten Abschnitt und wenigstens einen verengten Abschnitt aufweist und wobei ferner der aufgeweitete Abschnitt mit den Rückhaltemitteln zusammenwirkt, so daß ein Lösen der unrunden Erhebung aus dem Eingriff mit dem unrunden Schlitz verhindert ist.

3. Zapfengelenk nach Anspruch 2, dadurch gekennzeichnet, daß die unrunde Erhebung eine zwischen den Seitenkanten in der Nähe des erweiterten Abschnittes ausgebildete Ausnehmung aufweist, welche ein flexibles Einwärtsbiegen der Seitenkanten wenigstens in der Nähe des erweiterten Abschnittes ermöglicht.

4. Zapfengelenk nach Anspruch 2 oder 3, dadurch gekennzeichnet, daß wenigstens ein Teil der unrunden Erhebung einen hinterschnittenen Bereich aufweist.

5. Zapfengelenk nach wenigstens einem der Ansprüche 2 bis 4, dadurch gekennzeichnet, daß die Seitenkanten von dem erweiterten Abschnitt an einem Ende in Richtung des verengten Abschnitts am anderen Ende konvergieren.

6. Zapfengelenk nach wenigstens einem der Ansprüche 2 bis 4, dadurch gekennzeichnet, daß die unrunde Erhebung einen halbkreisförmigen Abschnitt und einen Blockabschnitt umfaßt, wobei sich der Blockabschnitt quer in Richtung Unterkante der Schenkel des Zwischenelementes erstreckt, wobei ferner eine Breite des Blockabschnittes kleiner ist als der Durchmesser des halbkreisförmigen Abschnitts.

7. Zwischenelement zur Verwendung in einem Zapfengelenk einer Wischerblattanordnung gemäß einem der Ansprüche 1 bis 6, dadurch gekennzeichnet, daß das Zwischenelement (17) U-förmig ausgebildet ist, mit einer Grundseite (18) und Schenkeln (19, 20), welche sich von gegenüberliegenden Kanten der Grundseite (18) des Zwischenelementes (17) erstrecken, wobei das Zwischenelement (17) derart ausgebildet ist, daß es zwischen dem ersten und zweiten U-Profil-Element (11, 14) des Zapfengelenkes (10) gemäß wenigstens einem der Ansprüche 1 bis 6 anordbar ist,
wobei das Zwischenelement einen runden, einteiligen Drehzapfen (23) aufweist, welcher sich von jedem Schenkel (19, 20) des Zwischenelementes zum Eingriff in eine jeweilige Lageröffnung (24) in einem jeweiligen Schenkel (16) des zweiten U-Profil-Elementes (14) erstreckt, wodurch das zweite U-Profil-Element (14) bezüglich dem Zwischenelement (17) schwenkbar ist,
wobei ferner das Zwischenelement eine Erhebung (26) aufweist, welche sich auswärts von jedem Schenkel (19, 20) des Zwischenelementes zum Eingriff in den Schlitz in einem jeweiligen Schenkel des ersten U-Profil-Elementes (11) erstreckt,
**dadurch gekennzeichnet,** daß
jede Erhebung (26) unrund ausgebildet ist und in ihrer Umrißform dem unrunden Schlitz (32), in den eine jeweilige Erhebung (26) eingreift, entspricht, wodurch eine Schwenkbewegung der unrunden Erhebung (26) in dem Schlitz (32) und damit des ersten U-Profil-Elementes (11) bezüglich des Zwischenelementes (17) verhindert ist.

8. Zwischenelement nach Anspruch 7, dadurch gekennzeichnet, daß die unrunde Erhebung Seitenkanten (27, 28) aufweist, welche sich im wesentlichen quer zur Längsrichtung des Zwischenelementes erstrecken, wobei jede unrunde Erhebung zwischen den Seitenkanten wenigstens einen erweiterten Abschnitt und wenigstens einen verengten Abschnitt aufweist.

9. Zwischenelement nach Anspruch 8, dadurch gekennzeichnet, daß die unrunde Erhebung zwischen den Seitenkanten in der Nähe des erweiterten Abschnitts eine Ausnehmung (29) umfaßt, welche ein flexibles Einwärtsbiegen der Seitenkanten wenigstens in der Nähe des erweiterten Abschnittes erlaubt.

10. Zwischenelement nach Anspruch 8 oder 9, dadurch gekennzeichnet, daß die unrunde Erhebung wenigstens teilweise hinterschnitten ausgebildet ist.

11. Zwischenelement nach wenigstens einem der Ansprüche 1 bis 10, dadurch gekennzeichnet, daß die Seitenkanten ausgehend von dem erweiterten Abschnitt an einem Ende zum verengten Abschnitt am anderen Ende konvergieren.

12. Zwischenelement nach wenigstens einem der Ansprüche 8 bis 10, dadurch gekennzeichnet, daß die unrunde Erhebung einen halbkreisförmigen Abschnitt (50) und einen Blockabschnitt (51) umfaßt, wobei sich der Blockabschnitt quer in Richtung der Unterkante der Schenkel des Zwischenelementes erstreckt, wobei eine breite des Blockabschnittes kleiner ist als ein Durchmesser des halbkreisförmigen Abschnittes.

## Revendications

1. Articulation à pivot dans un ensemble de lame d'essuie-glace, ladite articulation à pivot comprenant :
- un élément de canal primaire (11) ayant une paroi de base (12) et une paroi latérale (13) pendant à partir de chaque bordure s'étendant longitudinalement de ladite paroi de base ;
- un élément de canal secondaire (14) ayant une paroi de base (15) et une paroi latérale (16) pendant à partir de chaque bordure s'étendant longitudinalement de ladite paroi de base située de telle sorte que ledit élément de canal secondaire s'emboîte à l'intérieur dudit élément de canal primaire ;
- un élément d'insert (17) de configuration en canal, ayant une paroi de base (18) et une paroi latérale (19) pendant à partir des bordures opposées de ladite paroi de base, ledit élément d'insert étant situé entre lesdits éléments de canal primaire et de canal secondaire ;
- ledit élément d'insert ayant un tourillon plein circulaire (23), s'étendant vers l'intérieur à partir de chaque paroi latérale d'élément d'insert et engagé avec une ouverture de palier circulaire (24) dans une paroi latérale précitée respective dudit élément de canal secondaire, ce par quoi ledit élément de canal secondaire peut tourner par rapport audit élément d'insert ;
- ledit élément d'insert ayant en outre une projection (26) s'étendant vers l'extérieur à partir de chaque paroi latérale d'élément d'insert précitée, chaque projection précitée étant engagée vers l'extérieur dans une ouverture (34) dans une paroi latérale précitée respective de l'élément de canal primaire, chaque projection précitée correspondant dans sa forme à la partie de l'ouverture dans laquelle elle est engagée ;
caractérisée par le fait que :
- chaque projection précitée (26) est de forme non circulaire, chaque projection non circulaire précitée étant engagée vers l'extérieur dans une fente non circulaire (34) dans une paroi latérale précitée respective de l'élément de canal primaire, chaque projection non circulaire précitée correspondant dans sa forme à la partie de la fente dans laquelle elle est engagée, ce par quoi une rotation de ladite projection non circulaire dans ladite fente, et, de ce fait, dudit élément de canal primaire par rapport audit élément d'insert, est empêchée ;
- chaque fente précitée s'ouvrant sur une bordure inférieure (33) de la paroi latérale dans laquelle la fente est formée, et lesdites fentes comprenant en outre des moyens de rétention (35) pour retenir les projections non circulaires engagées avec elles.

2. Articulation à pivot selon la revendication 1, dans laquelle chaque projection non circulaire précitée présente des bordures de côtés latéraux s'étendant généralement transversalement à la direction longitudinale desdits éléments primaire et secondaire, chaque projection non circulaire précitée ayant au moins une section élargie entre lesdites bordures de côtés latéraux et au moins une section rétrécie entre lesdites bordures de côtés latéraux, et dans laquelle ladite section élargie coopère avec lesdits moyens de rétention pour empêcher le retrait de ladite projection non circulaire à partir d'une fente précitée dans laquelle elle est engagée.

3. Articulation à pivot selon la revendication 2, dans laquelle ladite projection non circulaire comprend un moyen formant cavité situé entre lesdites bordures de côtés latéraux au voisinage d'une section élargie précitée pour améliorer l'aptitude desdites bordures de côtés latéraux à fléchir vers l'intérieur au moins au voisinage de ladite section élargie.

4. Articulation à pivot selon la revendication 2 ou la revendication 3, dans laquelle au moins une partie de la projection non circulaire comprend une région en creux.

5. Articulation à pivot selon l'une quelconque des revendications 2 à 4, dans laquelle les bordures de côtés latéraux convergent d'une section élargie précitée à une extrémité à une section rétrécie précitée au niveau de l'autre extrémité de chaque bordure latérale précitée.

6. Articulation à pivot selon l'une quelconque des revendications 2 à 4, dans laquelle la projection non circulaire comprend une section semi-circulaire et une section formant bloc, la section formant bloc s'étendant transversalement vers une bordure inférieure de la paroi latérale de l'élément d'insert, ladite section formant bloc ayant une largeur inférieure au diamètre de ladite section semi-circulaire.

7. Elément d'insert destiné à être utilisé dans une articulation à pivot d'un ensemble de lame d'essuie-glace du type tel que défini à l'une quelconque des revendications 1 à 6,
- l'élément d'insert (17) étant d'une configuration en canal ayant une paroi de base (18) et une paroi latérale (19, 20) pendant à partir de bordures opposées de ladite paroi de base (18), ledit élément d'insert (17) étant adapté pour être situé entre lesdits éléments de canal primaire et de canal secondaire (11, 14) de l'articulation à pivot (10) telle que définie à l'une quelconque des revendications 1 à 6,
- ledit élément d'insert ayant un tourillon plein circulaire (23) s'étendant vers l'intérieur à partir de chaque paroi latérale d'élément d'insert précitée (19, 20) en vue d'un engagement à l'intérieur de chaque ouverture de palier circulaire (24) dans la paroi latérale respective (16) dudit élément de canal secondaire (14), ce par quoi ledit élément de canal secondaire (14) peut tourner par rapport audit élément d'insert (17) ;
- ledit élément d'insert comprenant en outre une projection (26) s'étendant vers l'extérieur à partir de chaque paroi latérale d'élément d'insert précitée (19, 20) en vue d'un engagement dans la fente dans une paroi latérale précitée respective de l'élément de canal primaire (11),
caractérisé par le fait que chaque projection précitée (26) est de forme non circulaire, correspondant dans sa forme à la partie de la fente non circulaire (32) dans laquelle elle est engagée, ce par quoi une rotation de ladite projection non circulaire (26) dans ladite fente (32) et, de ce fait, dudit élément de canal primaire (11) par rapport audit élément d'insert (17) est empêchée.

8. Elément d'insert selon la revendication 7, dans lequel chaque projection non circulaire précitée présente des bordures de côtés latéraux (27, 28) s'étendant généralement transversalement à la direction longitudinale dudit élément d'insert, chaque projection non circulaire précitée ayant au moins une section élargie entre lesdites bordures de côtés latéraux et au moins une section rétrécie entre lesdites bordures de côtés latéraux.

9. Elément d'insert selon la revendication 8, dans lequel ladite projection non circulaire comprend un moyen formant cavité (29) situé entre lesdites bordures de côtés latéraux au voisinage d'une section élargie précitée afin d'améliorer l'aptitude desdites bordures de côtés latéraux à fléchir vers l'intérieur au moins au voisinage de ladite section élargie.

10. Elément d'insert selon la revendication 8 ou la revendication 9, dans lequel au moins une partie de la projection non circulaire comprend une région en creux.

11. Elément d'insert selon l'une quelconque des revendications 8 à 10, dans lequel les bordures de côtés latéraux convergent d'une section élargie précitée à une extrémité à une section rétrécie précitée à l'autre extrémité de chaque bordure latérale précitée.

12. Articulation à pivot selon l'une quelconque des revendications 8 à 10, dans laquelle la projection non circulaire comprend une section semi-circulaire (50) et une section formant bloc (51), la section formant bloc s'étendant transversalement vers une bordure inférieure de la paroi latérale d'élément d'insert, ladite section formant bloc ayant une largeur inférieure au diamètre de ladite section semi-circulaire.
